# EUROPÄISCHE PATENTSCHRIFT

(11) **EP 3 451 087 B1**
(45) Veröffentlichungstag und Bekanntmachung des Hinweises auf die Patenterteilung: **12.08.2020**
(21) Anmeldenummer: 17189469.4
(22) Anmeldetag: 05.09.2017
(51) Int. Cl.: G05B 19/048, G05B 23/02

(54) **SYSTEM UND VERFAHREN ZUR AUSWAHL UND IDENTIFIKATION VON FELDGERÄTEN**
SYSTEM AND METHOD FOR THE SELECTION AND IDENTIFICATION OF FIELD DEVICES
SYSTÈME ET PROCÉDÉ DE SÉLECTION ET D'IDENTIFICATION DES APPAREILS DE TERRAIN

(43) Veröffentlichungstag der Anmeldung: 06.03.2019
(73) Patentinhaber: Bürkert Werke GmbH & Co. KG, 74653 Ingelfingen (DE)
(72) Erfinder: Maier, Franziska, Dr., 76137 Karlsruhe (DE); Bauer, Johannes, 76337 Waldbronn (DE); Hagen, Claudius, 74653 Ingelfingen (DE)
(74) Vertreter: Prinz & Partner mbB

(56) Entgegenhaltungen:
- DE-A1-102016 115 219
- US-A1- 2017 131 705

## Beschreibung

### GEBIET DER ERFINDUNG

Die Erfindung betrifft ein System und ein Verfahren zur Auswahl und Identifikation von Feldgeräten.

### TECHNISCHER HINTERGRUND

Feldgeräte sind technische Einrichtungen im Bereich der Automatisierungstechnik. Zu den Feldgeräten gehören Aktoren (wie z. B. Ventile, Stellglieder, Motoren) und Sensoren (wie z.B. Durchflussmengenmesser, Temperaturmesser, pH-Sensoren).

Die Feldgeräte sind dabei üblicherweise mit einem Steuerungs- und Leitsystem verbunden. Die Kommunikation zwischen den Feldgeräten und dem Steuerungs- und Leitsystemen läuft in der Regel über einen Feldbus. Anstelle eines Feldbusses kommt inzwischen aber auch vermehrt andere Netzwerktechnik, beispielsweise ein echtzeitfähiges Ethernet, zum Einsatz.

Auf diese Weise wird in Industrieanlagen ein Prozess von dem Steuerungs- und Leitsystem überwacht, gesteuert und geregelt. Die Sensoren ermitteln Regelgrößen wie Temperatur, Druck und Durchfluss. Diese Regelgrößen werden dann von dem Feldgerät über einen Feldbus oder einem anderen Kommunikationskanal an das Steuerungs- und Leitsystem übermittelt. Von diesem werden dann aus den Regelgrößen anhand prozessspezifischer Vorgaben Stellgrößen berechnet und an die Feldgeräte, insbesondere an die Aktoren, übertragen. Entsprechend der Stellgrößen wirken die Aktoren auf den gesteuerten bzw. geregelten Produktionsprozess ein.

Es ist unmittelbar ersichtlich, dass Fehler oder Ausfälle sowohl bei der Ermittlung der Regelgrößen, als auch bei der Übersetzung der Stellgrößen in einen Eingriff in den Produktionsprozess, für die Qualität des Prozessergebnisses hochrelevant sind. Anders ausgedrückt kann ein einziges fehlerhaftes Feldgerät, sei es ein Sensor oder ein Aktor, schwerwiegende und durchaus fatale Auswirkungen haben.

Entsprechend werden hohe Anforderungen an Qualität, Robustheit und Verfügbarkeit an die Feldgeräte gestellt. Es wird deshalb ein hoher technischer Aufwand betrieben, um die Gefahr von Fehlfunktionen zu reduzieren oder einen Defekt zumindest frühzeitig erkennen und melden zu können. Häufig wird auch ein hoher Aufwand in Bezug auf die Wartung der Feldgeräte betrieben.

Immer dann, wenn die Wartung oder der Austausch eines Feldgeräts nicht bei laufendem Prozess stattfinden kann, kommt es zu (teilweise sehr teuren) Stillstandszeiten.

Aus der Schrift DE 20 2013 103 332 U1 ist ein Feldgerät mit einem Display und einer separaten Statusanzeige bekannt. Es ist so möglich, neben Prozessdaten, auch den Betriebszustand des Feldgeräts in übersichtlicher und einfach zu erfassender Weise darzustellen. Die mit der Überwachung oder Wartung beauftragte Person kann den Betriebszustand des Feldgeräts bereits mit einem flüchtigen Blick sicher erkennen. Fehlfunktionen und Störungen im Prozessablauf werden auf diese Weise minimiert.

In den Schriften DE 10 2013 113 726 A1, DE 10 2013 113 725 A1 und DE 10 2013 113 728 A1 sind ebenfalls Feldgeräte mit einer separaten Statusanzeige zur Darstellung des Betriebszustandes der Feldgeräte offenbart. Konkret handelt es sich dabei um Fluidsteuerköpfe einer fluidsteuernden oder fluidmessenden Vorrichtung mit jeweils einem umlaufenden Leuchtring.

In der europäischen Patentschrift EP 1 486 841 B1 ist ein Verfahren zur Abfrage des Feldgerätestatus eines Feldgerätes mittels eines Handsenders im Taschenformat beschrieben. Ein Service-Techniker kann sich auf diese Weise anzeigen lassen, ob das Feldgerät eine Fehlfunktion aufweist, selbst wenn das Feldgerät schlecht zugänglich ist. Die einwandfreie Funktion des Feldgeräts wird durch ein Blinken des Feldgerätdisplays signalisiert.

Die DE 10 2016 115 219 A1 offenbart Verfahren, Vorrichtungen, Systeme und Fertigungsartikel zum Überwachen von Prozesssteuerungsalarmen. Ein offenbartes Verfahren enthält das Identifizieren von Komponenten in dem Prozesssteuerungssystem, die den zu überwachenden Alarmen entsprechen. Das Verfahren enthält ferner, wenn eine Abfrage zum Anfordern eines Status eines bestimmten der zu überwachenden Alarme nicht in einer Statusaktualisierungswarteschlange ist, das Erzeugen einer mit der Überwachungsberichtanforderung verknüpften Anforderung, um den Status des bestimmten der Alarme von der entsprechenden Komponente anzufordern.

### BESCHREIBUNG

Es ist eine Aufgabe der Erfindung, ein System und ein Verfahren zur Selektion und Identifikation von Feldgeräten aus einer Mehrzahl von Feldgeräten bereitzustellen. Weitere Aufgaben ergeben sich aus den nachfolgenden Beschreibungen.

Gemäß einem Aspekt umfasst das System ein Cluster (eine Mehrzahl) von Feldgeräten. Die Anzahl der Feldgeräte des Clusters kann vorteilhaft größer als zwei, weiter vorteilhaft größer als drei sein. Den Feldgeräten kann jeweils ein Signalgeber zugeordnet sein. Vorteilhaft ist der Signalgeber unmittelbar mit dem Feldgerät verbunden bzw. an diesem angebracht. Der Signalgeber befindet sich also vorteilhaft am Ort des Feldgerätes. Beispielsweise kann der Signalgeber ein optischer Signalgeber, wie z. B. ein Leuchtring, ein Leuchtstreifen, eine Signalsäule (Mehrfachleuchte), (farbige) LEDs oder ein Display sein. Auch kann der Signalgeber ein akustischer Signalgeber sein. Auch Mischformen sind möglich, beispielsweise eine Mehrfachleuchte mit einem integrierten Schallgebermodul. Andere Formen von Signalgebern sind ebenfalls denkbar, beispielsweise solche, die ein haptisches Feedback geben (Vibrationsmodule) oder beispielsweise ein Webserver, der Anzeigeinformationen zwar bereit- aber nicht selbst darstellt. Vorzugsweise ist der jeweilige Signalgeber jedoch eindeutig und unmittelbar einem einzigen Feldgerät zugeordnet, insbesondere unmittelbar damit verbunden bzw. an diesem befestigt. Daher sind optische Signalgeber in Form von leuchtenden Elementen (z.B. LEDs etc) besonders vorteilhaft.

Gemäß einem weiteren Aspekt weisen die Feldgeräte jeweils zumindest eine Kommunikationsschnittstelle auf. Über die Kommunikationsschnittstelle können die Feldgeräte untereinander und/oder mit einem übergeordneten Steuer- und Leitsystem Informationen (Daten) austauschen. Insbesondere können die Feldgeräte über die Kommunikationsschnittstelle an ein gemeinsames Bussystem oder Netzwerk angebunden sein. Insbesondere sind die Feldgeräte des Clusters von Feldgeräten mittels eines Bussystems oder Netzwerkes miteinander verbunden. Auch bei Diagnoseschnittstellen handelt es sich um Kommunikationsschnittstellen im Sinne der Beschreibung. Entsprechendes gilt beispielsweise für einen Webserver, über dessen Dienst mit dem Feldgerät kommuniziert werden kann.

Gemäß einem weiteren Aspekt weisen die Feldgeräte jeweils eine Datenverarbeitungsvorrichtung auf. Die Datenverarbeitungsvorrichtung ist dazu ausgebildet, Daten, insbesondere Systemwerte, Diagnosewerte und/oder Prozesswerte zu verarbeiten und intern (beispielsweise für Programme, Prozesse, Dienste, Routinen) und/oder extern (beispielsweise über die Kommunikationsschnittstelle) bereitzustellen.

Systemwerte beschreiben dabei beispielsweise den Typ des Feldgeräts, die Version der Firmware, das Herstellungsdatum, das Datum der Inbetriebnahme, das Datum der letzten Wartung oder andere Werte, die das Feldgerät bzw. dessen Konfiguration beschreiben.

Diagnosewerte sind solche Werte, die einen Rückschluss auf den Zustand (zum Beispiel im Sinne der Gerätegesundheit) zulassen. Dies umfasst beispielsweise die Anzahl der Betriebsstunden, die kumulierten Verfahrwege von Aktoren, die Anzahl der Öffnung und Schließung eines Ventils, oder einen Verschleißwert für eine Ventilmembran. In manchen Fällen können Werte nicht eindeutig den Systemwerten oder den Diagnosewerten zugeordnet werden. Eine künstliche Trennung zwischen den Kategorien ist dann häufig nicht zweckmäßig.

Neben den Systemwerten und den Diagnosewerten bilden die Prozesswerte eine wichtige Kategorie. Unter die Prozesswerte fallen im Wesentlichen alle diejenigen Werte, die den Prozess selbst beschreiben. Insbesondere fallen darunter alle Stell- und Regelgrößen, oder auch eine Temperatur, ein pH-Wert, ein Durchflusswert (Massenstrom) oder die Ventilstellung.

Gemäß einem weiteren Aspekt ist das System ausgebildet, zumindest einen korrespondierenden Systemwert und/oder Diagnosewert und/oder Prozesswert der jeweiligen Feldgeräte basierend auf einem gemeinsamen Auswahlkriterium selektiv auszuwählen. Der Begriff "korrespondierend" im vorangegangenen Satz betrifft allgemein das gemeinsame Auswahlkriterium. Das gemeinsame Auswahlkriterium kann dabei als übergeordnete Fragestellung verstanden werden. Das System ist also dazu ausgebildet, für die jeweiligen Feldgeräte diejenigen Werte auszuwählen, die eine besondere Aussagekraft hinsichtlich der übergeordneten Fragestellung des gemeinsamen Auswahlkriteriums aufweisen.

Korrespondierende Werte können, müssen aber nicht gleichen Typs und Ursprungs sein. Relevant ist vielmehr, dass die korrespondierenden Werte hinsichtlich des gemeinsamen Auswahlkriteriums aussagekräftig sind.

Für zwei gleiche oder vergleichbare Feldgeräte desselben Typs wird in der Regel, abhängig vom Auswahlkriterium, auf beiden Feldgeräten der gleiche Wert ausgewählt. Bei Feldgeräten unterschiedlichen Typs können die korrespondierenden Werte auch komplett unterschiedlichen Ursprungs sein.

Während beispielsweise für einen bestimmten Typ Aktor hinsichtlich einer prognostizierten Restlebensdauer der kumulierte Verfahrweg einer Spindel als besonders aussagekräftig gelten kann, ist möglich, dass ein chemischer Sensor allein aufgrund des Kontakts mit dem Prozessfluid zeitabhängig degeneriert. Bei den korrespondierenden Diagnosewerten würde es sich in diesem Fall also einerseits um den kumulierten Verfahrweg, andererseits aber um die Zeitspanne seit der Inbetriebnahme handeln.

Ein anderes Beispiel für das gemeinsame Auswahlkriterium könnte die Aktualität der Firmware sein. Hier ist sofort ersichtlich, dass für unterschiedliche Arten von Feldgeräten ganz unterschiedliche Versionen der Firmware aktuell sein können.

Ferner kann es sich bei dem Auswahlkriterium auch um eine übergeordnete Fragestellung handeln, welche bspw. die Prozesswerte betrifft. Je nach Feldgerät können die entsprechenden Prozesswerte bspw. eine Temperatur (Temperatursensor), ein Durchfluss (Durchflussmesser), ein ph-Wert (ph-Wert Sensor) oder eine Ventilstellung (Ventil) sein.

Gemäß einem weiteren Aspekt ist das System ausgebildet, entsprechend dem Auswahlkriterium basierend auf dem zumindest einen ausgewählten System- und/oder Diagnosewert und/oder Prozesswert der jeweiligen Feldgeräte eine Statusinformation für das jeweilige Feldgerät zu ermitteln und mit dem zugeordneten Signalgeber auszugeben.

Auf diese Weise werden, abhängig von dem gemeinsamen Auswahlkriterium, auf Grundlage der jeweils korrespondierenden System- und/oder Diagnosewerte und/oder Prozesswerte Cluster von Feldgeräten selektiv ausgewählt und über die von dem jeweiligen Signalgeber ausgegebene Statusinformation individuell innerhalb des Clusters identifizierbar gemacht.

Die Anzeige erfolgt vorteilhaft für alle Feldgeräte des Clusters gleichzeitig, oder derart sequentiell, dass die Statusinformationen für das ganze Cluster schnell und unmittelbar wahrnehmbar sind (sogenannte "Cluster-Signalisierung" oder bspw. "Cluster-Leuchten" bei optischen Signalen).

Gemäß einem vorteilhaften Aspekt kann das System ein Diagnosegerät umfassen. Das Diagnosegerät kann eine Datenverarbeitungseinrichtung, eine Kommunikationsschnittstelle zur Kommunikation mit den Feldgeräten und eine Mensch-Maschine-Schnittstelle aufweisen.

Das Diagnosegerät kann dazu ausgebildet sein, um mit den jeweiligen Feldgeräten Informationen auszutauschen und insbesondere die korrespondierenden System- und/oder Diagnosewerte und/oder Prozesswerte der jeweiligen Feldgeräte selektiv basierend auf Benutzereingaben an der Mensch-Maschine-Schnittstelle auszuwählen.

Bei dem Diagnosegerät kann es sich um eine übergeordnete Steuereinrichtung oder eines der Feldgeräte des Systems bzw. des Clusters handeln. Alternativ kann das Diagnosegerät auch ein PC, ein Laptop, ein Tablet-PC oder ein ähnliches Handheld-Device mit einem Konfigurationswerkzeug (wie beispielsweise dem Bürkert Communicator) sein.

Gemäß einem weiteren Aspekt kann das System einen Diagnoseprogrammcode umfassen. Der Diagnoseprogrammcode kann dazu ausgebildet sein, um von der Datenverarbeitungseinrichtung des Diagnosegerätes und/oder von der Datenverarbeitungsvorrichtung eines der Feldgeräte ausgeführt zu werden.

Der Diagnoseprogrammcode kann ferner ausgebildet sein, den zumindest einen ausgewählten System- und/oder Diagnosewert und/oder Prozesswert jedes Feldgeräts des Feldgeräte-Clusters abzufragen, zu verarbeiten und/oder zu verändern.

Des Weiteren kann der Diagnoseprogrammcode ausgebildet sein, aus dem zumindest einen ausgewählten System- und/oder Diagnosewert und/oder Prozesswert jedes Feldgeräts des Feldgeräte-Clusters die Statusinformation für das jeweilige Feldgerät zu ermitteln.

Der Diagnoseprogrammcode kann dabei Bearbeitungsbefehle, Datenstrukturen und/oder Parameter umfassen.

Mit anderen Worten können vom Diagnoseprogrammcode den Systemwerten, Diagnosewerten und/der Prozesswerten eines Feldgeräts, basierend auf einem Regelwerk, entsprechende Statusinformationen zugeordnet werden.

Statusinformationen können dabei vorteilhaft als Farbwerte einer Leuchtanzeige wahrnehmbar gemacht werden. Entsprechend kann es sich innerhalb des Systems bei den Statusinformationen um Ausgabeanweisungen zur Steuerung der jeweiligen Signalgeber der Feldgeräte handeln.

Dadurch ergibt sich vorteilhaft, dass Statusinformationen schnell und unmittelbar für ein ganzes Cluster von Feldgeräten erkennbar gemacht werden, wobei gleichzeitig unmittelbar der Ort/Position der Feldgeräte erkennbar wird.

Gemäß einem weiteren vorteilhaften Aspekt kann das Diagnosegerät ausgebildet sein, den Diagnoseprogrammcode basierend auf den Benutzereingaben an der Mensch-Maschinen-Schnittstelle zu erstellen oder aus einer Mehrzahl von Diagnoseprogrammcodes auszuwählen. Diagnoseprogrammcodes können in einer Skriptsprache, wie z. B. Lua, oder einer compilierbaren Sprache erstellt werden.

Beispielsweise kann das Diagnosegerät eine Template-basierte Vorlage des Diagnoseprogrammcodes mittels der Benutzereingaben parametrisieren und in maschinenausführbaren Code (bspw. Binärcode) compilieren.

Gemäß einem weiteren vorteilhaften Aspekt kann das Diagnosegerät ausgebildet sein, den Diagnoseprogrammcode in der Datenverarbeitungseinrichtung auszuführen.

Der Diagnoseprogrammcode kann dabei ausgebildet sein, den zumindest einen ausgewählten System- und/oder Diagnosewert und/oder Prozesswert von den Feldgeräten des Feldgeräte-Clusters abzurufen und die ermittelte Statusinformation für das jeweilige Feldgerät an das jeweilige Feldgerät zu übertragen.

Mit anderen Worten kann der Diagnoseprogrammcode auf dem Diagnosegerät selbst ausgeführt werden. Der Diagnoseprogrammcode kann die Feldgeräte dann beispielsweise ansteuern, die angeforderten System- und/oder Diagnosewerte und/oder Prozesswerte an das Diagnosegerät zu übertragen. Das Diagnosegerät kann daraufhin aus den übertragenen Werten eine Statusinformation für jedes der Feldgeräte ermitteln. Dies kann beispielsweise mittels eines Zuordnungsregelwerkes geschehen. Die ermittelten Statusinformationen für jedes der Feldgeräte des Clusters können von dem Diagnosegerät dann wieder auf die jeweiligen Feldgeräte des Clusters übertragen werden und die Feldgeräte des Clusters können veranlasst werden, die Statusinformation mit dem Signalgeber anzuzeigen.

Gemäß einem Aspekt kann das Diagnosegerät die jeweiligen Feldgeräte also ansteuern mittels der zugehörigen Signalgeber die Statusinformationen auszugeben. Gemäß einem anderen Aspekt kann das Diagnosegerät auch unmittelbar die/alle Feldgeräte des Clusters veranlassen, eine der ermittelten Statusinformation des jeweiligen Feldgerätes entsprechende Anzeige am Signalgeber einzuschalten.

Gemäß einem weiteren Aspekt kann das Diagnosegerät ausgebildet sein, einen Diagnoseprogrammcode (oder Teil des Diagnoseprogrammcodes) an mehrere der Feldgeräte zu übertragen. Die Feldgeräte können dabei ausgebildet sein, den übertragenen Diagnoseprogrammcode in ihren jeweiligen Datenverarbeitungsvorrichtungen auszuführen.

Gemäß einem weiteren vorteilhaften Aspekt kann der Diagnoseprogrammcode aus einer Mehrzahl von Diagnoseprogrammcodes ausgewählt werden. Die Mehrzahl von Diagnoseprogrammcodes kann dabei in einem Speicher der Datenverarbeitungseinrichtung des Diagnosegeräts und/oder in einem Speicher der Datenverarbeitungsvorrichtung der jeweiligen Feldgeräte vorgehalten werden.

Mit anderen Worten kann beispielsweise das Diagnosegerät aus verschiedenen Diagnoseprogrammcodes auf den jeweiligen Feldgeräten, abhängig von dem gemeinsamen Auswahlkriterium, einen bestimmten Diagnoseprogrammcode auswählen und diesen auf dem Feldgerät, bzw. konkreter in der Datenverarbeitungsvorrichtung des Feldgeräts ausführen. Die korrespondierenden Werte können so auf dem Feldgerät verarbeitet werden. Das Ergebnis der Verarbeitung kann an das Diagnosegerät übertragen werden. Die Zuordnung der Statusinformation kann auf dem Diagnosegerät stattfinden.

Alternativ können die Werte jedoch auch auf dem Feldgerät verarbeitet werden, wobei die Zuordnung der Statusinformation ebenfalls direkt auf dem Feldgerät vorgenommen werden kann. Eine Übertragung der korrespondierenden Werte in das Diagnosegerät kann dann entfallen.

Dabei können die Werte und insbesondere die Statusinformation dennoch an das Diagnosegerät übertragen werden. Vorteilhaft kann auf diese Weise eine Darstellung an zentraler Stelle stattfinden.

Gemäß einem weiteren vorteilhaften Aspekt kann das Diagnosegerät ausgebildet sein, Parameter des Diagnoseprogrammcodes basierend auf den Benutzereingaben an der Mensch-Maschine-Schnittstelle einzustellen.

Gemäß einem weiteren vorteilhaften Aspekt können die Feldgeräte jeweils einen Diagnosemodus aufweisen. Im Diagnosemodus können die Feldgeräte mittels der zugeordneten Signalgeber die jeweils ermittelte Statusinformation ausgeben.

Nach Beendigung des Diagnosemodus können die Signalgeber ein zuletzt vor Beginn des Diagnosemodus ausgegebenes Signal ausgeben. In anderen Worten können die Signalgeber nach einem Ende des Diagnosemodus in ihren vorherigen Betriebszustand zurückkehren.

Gemäß einem weiteren vorteilhaften Aspekt kann das Diagnosegerät ausgebildet sein, um den Diagnosemodus auf den jeweiligen Feldgeräten zu aktivieren.

Auch kann der Diagnoseprogrammcode ausgebildet sein, den Diagnosemodus auf den jeweiligen Feldgeräten zu aktivieren.

Gemäß einem weiteren vorteilhaften Aspekt kann sich der Diagnosemodus nach einer vorbestimmten Zeitspanne selbst beenden. Die vorbestimmte Zeitspanne kann dabei auf den Benutzereingaben an der Mensch-Maschine-Schnittstelle basieren oder von dem Diagnosegerät ermittelt werden. Die vorbestimmte Zeitspanne kann dabei insbesondere von System- und/oder Diagnosewerten und/oder Prozesswerten der Feldgeräte und/oder von einer Anzahl der Feldgeräte abhängig sein. So wird die Zeitspanne an den voraussichtlichen Zeitbedarf der Wartung angepasst.

Gemäß einem weiteren vorteilhaften Aspekt kann der Diagnosemodus der jeweiligen Feldgeräte ausgebildet sein, um von dem Diagnosegerät beendet zu werden. Das Diagnosegerät kann ausgebildet sein, die Diagnosemodi der Feldgeräte zu beenden. Der Diagnosemodus kann so bereits vor dem automatischen Zeitablauf beendet werden.

Gemäß einem weiteren vorteilhaften Aspekt können zumindest einige der Feldgeräte des Clusters jeweils eine Bedienvorrichtung aufweisen. Der Diagnosemodus der Feldgeräte kann ausgebildet sein, um von einer entsprechenden Benutzereingabe an einer der Bedienvorrichtungen beendet zu werden. Insbesondere kann der Diagnosemodus der jeweiligen Feldgeräte durch eine entsprechende Benutzereingabe an der Bedienvorrichtung des jeweiligen Feldgeräts beendet werden. Mit anderen Worten kann der Diagnosemodus eines Feldgeräts durch eine entsprechende Benutzereingabe direkt an dem Feldgerät beendet werden.

Alternativ oder zusätzlich können die Feldgeräte ausgebildet sein, so dass die Diagnosemodi aller Feldgeräte mittels einer entsprechenden Benutzereingabe an der Bedienvorrichtung eines der Feldgeräte beendet werden. In anderen Worten können alle Feldgeräte mittels einer entsprechenden Benutzereingabe an der Bedienvorrichtung eines der Feldgeräte gemeinsam beendet werden.

Gemäß einem weiteren vorteilhaften Aspekt kann das System derart ausgebildet sein, dass ein Beenden des Diagnosemodus eines ersten Feldgeräts ein Aktivieren des Diagnosemodus eines zweiten Feldgeräts auslöst. In anderen Worten kann der Diagnosemodus von einem zweiten Feldgerät aktiviert werden, sobald der Diagnosemodus an einem ersten Feldgerät beendet wird. Gleiches gilt natürlich nicht nur für das erste und zweite Feldgerät, sondern auch für alle weiteren Feldgeräte des Clusters, so dass jeweils (nur) ein Feldgerät im Diagnosemodus ist, und die Diagnosemodi der Feldgeräte sequentiell aktiviert werden.

Weiterhin bereitgestellt wird ein Verfahren zur Selektion und Identifikation von Feldgeräten aus einer Mehrzahl von Feldgeräten.

Gemäß einem Aspekt umfasst das Verfahren das Auswählen zumindest eines korrespondierenden System- und/oder Diagnosewertes und/oder Prozesswertes der jeweiligen Feldgeräte basierend auf einem gemeinsamen Auswahlkriterium. Insbesondere kann die Auswahl dabei auf Benutzereingaben an einer Mensch-Maschine-Schnittstelle eines Diagnosegeräts basieren.

Gemäß einem vorteilhaften Aspekt kann das Verfahren weiterhin das Erstellen eines Diagnoseprogrammcodes oder das Auswählen des Diagnoseprogrammcodes aus einer Mehrzahl von Diagnoseprogrammcodes und/oder das Parametrisieren eines Diagnoseprogrammcodes, basierend auf dem gemeinsamen Auswahlkriterium, umfassen.

Gemäß einem weiteren vorteilhaften Aspekt kann das Verfahren dabei das Auswählen des Diagnoseprogrammcodes aus einer Mehrzahl von Diagnoseprogrammcodes in den Datenverarbeitungsvorrichtungen der Feldgeräte und/oder das Parametrisieren des Diagnoseprogrammcodes in der Datenverarbeitungsvorrichtung der jeweiligen Feldgeräte umfassen.

Gemäß einem weiteren vorteilhaften Aspekt kann das Verfahren das Übertragen des Diagnoseprogrammcodes von der Datenverarbeitungseinrichtung des Diagnosegeräts in die Datenverarbeitungsvorrichtung der Feldgeräte umfassen.

Gemäß einem weiteren Aspekt umfasst das Verfahren das Ermitteln einer Statusinformation für das jeweilige Feldgerät, basierend auf dem dem Auswahlkriterium entsprechenden zumindest einen korrespondierenden System- und/oder Diagnosewert und/oder Prozesswert.

Gemäß einem vorteilhaften Aspekt der Erfindung kann das Verfahren weiterhin das Ausführen des Diagnoseprogrammcodes zum Ermitteln der Statusinformation für die jeweiligen Feldgeräte, insbesondere in der Datenverarbeitungseinrichtung des Diagnosegeräts oder in der Datenverarbeitungsvorrichtung der Feldgeräte, umfassen.

Gemäß einem weiteren vorteilhaften Aspekt der Erfindung kann das Verfahren das Ermitteln der Statusinformation für das jeweilige Feldgerät aus einer Mehrzahl möglicher Statusinformationen umfassen.

Den definierten Werten und/oder Wertebereichen der korrespondierenden System- und/oder Diagnosewerte und/oder Prozesswerte können in einem Zuordnungsregelwerk jeweils eine Statusinformation der möglichen Statusinformationen zugeordnet sein.

Insbesondere kann der Diagnoseprogrammcode das Zuordnungsregelwerk umfassen.

Gemäß einem weiteren vorteilhaften Aspekt kann das Verfahren das Ausführen des Diagnoseprogrammcodes in den Datenverarbeitungsvorrichtungen der jeweiligen Feldgeräte umfassen.

Gemäß einem weiteren vorteilhaften Aspekt kann das Verfahren das Aktivieren des Diagnosemodus zumindest eines der Feldgeräte und insbesondere der Diagnosemodi aller Feldgeräte eines Feldgeräte-Clusters umfassen.

Insbesondere kann die Aktivierung des oder der Diagnosemodi durch das Diagnosegerät vorgenommen werden.

Insbesondere kann das Verfahren auch das Aktivieren des Diagnosemodus eines der Feldgeräte, insbesondere durch das Diagnosegerät und/oder durch das Feldgerät und/oder durch eine Bedienereingabe an dem Feldgerät und/oder durch ein weiteres Feldgerät und/oder durch eine Bedienereingabe an dem weiteren Feldgerät umfassen.

Gemäß einem weiteren Aspekt umfasst das Verfahren das Ausgeben der jeweiligen Statusinformation durch einen dem jeweiligen Feldgerät zugeordneten Signalgeber. Insbesondere umfasst das Verfahren das Ausgeben der jeweiligen Statusinformationen in einem Diagnosemodus der Feldgeräte.

Gemäß einem weiteren vorteilhaften Aspekt der Erfindung kann das Verfahren das automatische Beenden des Diagnosemodus nach einer vorbestimmten Zeitspanne und/oder das Beenden des Diagnosemodus durch das Diagnosegerät und/oder das Beenden des Diagnosemodus durch das jeweilige Feldgerät umfassen. Insbesondere kann der Diagnosemodus nach Erfüllung einer Bedingung und/oder nach einer Bedienereingabe an dem Diagnosegerät oder an einem der Feldgeräte beendet werden.

### BESCHREIBUNG DER FIGUREN

Im Folgenden werden die Merkmale und Aspekte der Erfindung anhand von Ausführungsbeispielen und unter Bezugnahme auf die Figuren näher erläutert. Dabei zeigt
- FIG. 1 eine vereinfachte schematische Darstellung eines Feldbussystems mit Feldgeräten und einem Diagnosegerät,
- FIG. 2 eine vereinfachte schematische Darstellung eines Feldbussystems mit Feldgeräten und einem Diagnosegerät,
- FIG. 3 eine vereinfachte schematische Darstellung eines Feldbussystems mit Feldgeräten und einem Diagnosegerät,
- FIG. 4a bis FIG. 4f eine sequentielle vereinfachte schematische Darstellung eines Feldbussystems mit Feldgeräten und einem Diagnosegerät,
- FIG. 5a bis FIG. 5d eine sequentielle vereinfachte schematische Darstellung eines Feldbussystems mit Feldgeräten und einem Diagnosegerät
- FIG. 6a bis FIG. 6f eine sequentielle vereinfachte schematische Darstellung eines Feldbussystems mit Feldgeräten und einem Diagnosegerät.

### DETAILLIERTE BESCHREIBUNG

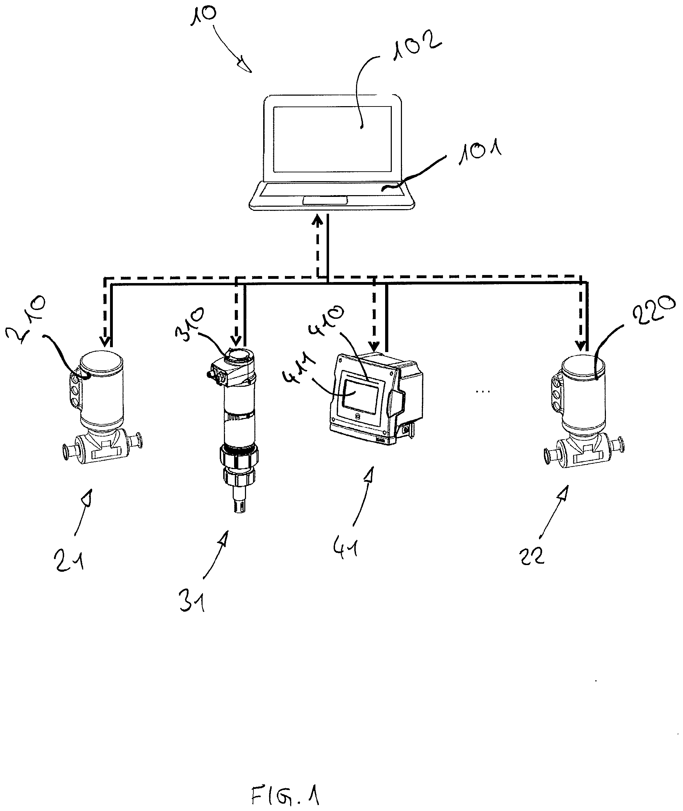

FIG. 1 zeigt eine vereinfachte schematische Darstellung eines Feldbussystems mit einem ersten bis vierten Feldgerät 21, 22, 31, 41 und einem Diagnosegerät 10.

Die Feldgeräte 21, 31, 41, 22 und das Diagnosegerät 10 sind über einen Feldbus verbunden. Bei dem Feldbus kann es sich beispielsweise um den Bürkert büS handeln.

Das erste Feldgerät 21 und das Feldgerät 22 weisen jeweils einen zugehörigen Signalgeber 210 und 220 auf. Bei dem Signalgeber handelt es sich in diesem Fall um einen mittels LEDs hinterleuchteten Leuchtring. Auch das dritte Feldgerät 31 weist einen Leuchtring 310 auf. Das vierte Feldgerät 41 weist neben einem Bildschirm 411 einen Leuchtstreifen 410 als Signalgeber auf. Die Signalgeber 210, 220, 310, 410 können von Datenverarbeitungsvorrichtungen der Feldgeräte 21, 22, 31, 41 angesteuert werden und unterschiedliche Leuchtfarben ausgeben. Die Leuchtfarbe der Farbsignale kann mittels Statusinformationen (Ausgabeanweisungen) über das Bussystem vorgegeben werden.

Das Diagnosegerät 10 (im vorliegenden Fall ein tragbarer PC/Laptop mit bspw. Tastatur 101 und Display 102) wird temporär mit dem Bussystem verbunden. Mit dem Diagnosegerät wird ein Diagnoseprogrammcode erstellt, der beispielsweise eine Betriebsstundenabfrage, einen Aktivierungszeitraum und zu Betriebsstundenzahlen zugeordnete Leuchtfarben umfasst. Beispielsweise wird einer Betriebsstundenzahl unter 100 Stunden die Leuchtfarbe grün zugeordnet. Einer Betriebsstundenzahl über 300 Stunden wird die Leuchtfarbe rot zugeordnet. Bei einer Betriebsstundenzahl die zwischen diesen beiden Werten liegt, also größer als 100 aber kleiner als 300 Stunden ist, wird die Leuchtfarbe gelb vorgesehen.

In einem nächsten Schritt werden (zumindest Teile) des Diagnoseprogramms oder das gesamte Diagnoseprogramm vom Diagnosegerät 10 über das Bussystem auf die Feldgeräte 21, 22, 31, 41 übertragen und dort anschließend ausgeführt.

Von dem Teil des Diagnoseprogrammcodes zur Betriebsstundenabfrage werden die Betriebsstundenzahlen auf den Feldgeräten abgerufen und an das Diagnosegerät übertragen. Im Diagnosegerät werden für jedes Feldgerät den Betriebsstundenzahlen mittels der Auswerteroutine des Diagnoseprogrammcodes entsprechende Leuchtfarben zugeordnet. Den Leuchtfarben entsprechende Statusinformationen werden vom Diagnosegerät 10 auf die Feldgeräte 21, 22, 31, 41 übertragen und aktivieren dort für die Dauer des Aktivierungszeitraums die jeweiligen Signalgeber 201, 220, 210 und 410.

Ein Service-Mitarbeiter kann auf diese Weise Feldgeräte, die einer Wartung nach einer bestimmten Anzahl von Betriebsstunden bedürfen, anhand der Farbsignale direkt in der Anlage identifizieren. Nach Ablauf des Aktivierungszeitraums schalten die Ausgabeeinrichtungen der Feldgeräte wieder auf ihre normale Anzeige zurück. Alternativ kann der Service-Mitarbeiter die Diagnoseanzeige auch auf einem der Feldgeräte von Hand ausschalten, sobald er die Wartung beendet hat.

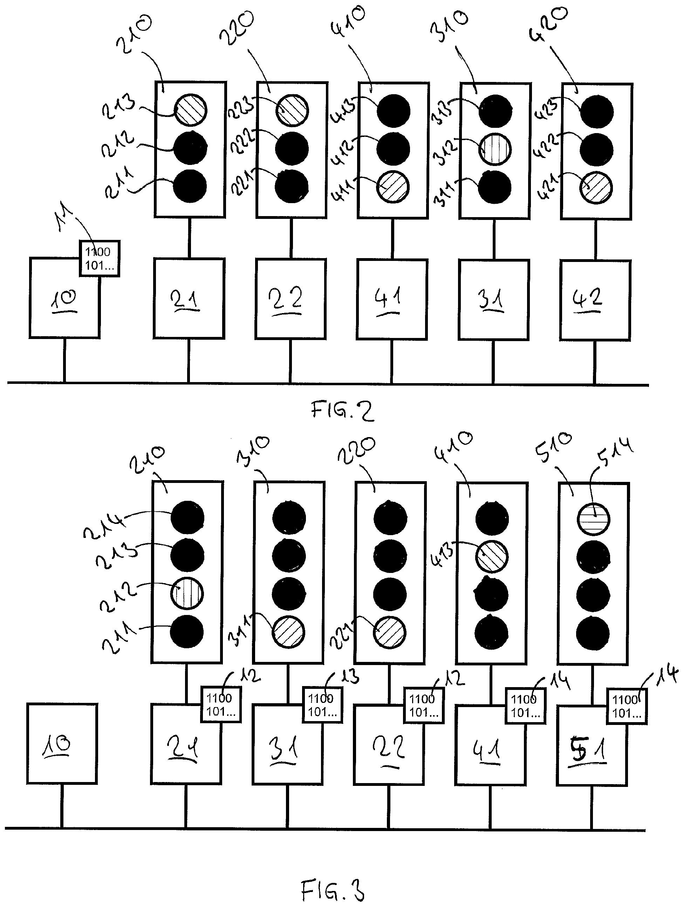

FIG. 2 zeigt eine vereinfachte schematische Darstellung eines Feldbussystems mit Feldgeräten 21, 22, 41, 31, 42 und einem Diagnosegerät 10. In wesentlichen Punkten ist das Feldbussystem vergleichbar mit demjenigen aus FIG. 1.

Das System umfasst eine Mehrzahl von Feldgeräten 21, 22, 41, 31, 42 mit jeweils einem den jeweiligen Feldgerät 21, 22, 41, 31, 42 zugeordneten Signalgeber 210, 220, 410, 310, 420.

Die Signalgeber 210 bis 410 sind aus Gründen der besseren Darstellbarkeit als Ampel mit drei verschiedenen Signalzuständen (plus "aus") gezeigt. Die jeweils zugeordneten Signalgeber 210 bis 420 können in, an oder bei den jeweiligen Feldgeräten 21 bis 42 angeordnet sein.

Die Feldgeräte weisen jeweils eine Kommunikationsschnittstelle und eine Datenverarbeitungsvorrichtung zum Bereitstellen von Systemwerten, Diagnosewerten und/oder Prozesswerten auf.

Das System ist ausgebildet, zumindest einem korrespondierenden System- und/der Diagnosewert und/oder Prozesswert der jeweiligen Feldgeräte basierend auf einem gemeinsamen Auswahlkriterium selektiv auszuwählen. Im gezeigten Ausführungsbeispiel ist das gemeinsame Auswahlkriterium der Typ der jeweiligen Feldgeräte. So sind das erste und das zweite Feldgerät 21, 22 jeweils baugleich, ebenso das dritte und fünfte Feldgerät 41, 42.

Das System ist weiterhin ausgebildet, basierend auf dem zumindest einen jeweils ausgewählten System- und/oder Diagnosewert und/oder Prozesswert (hier: dem Typ der Feldgeräte) eine Statusinformation für das jeweilige Feldgerät zu ermitteln und mit den zugeordneten Signalgebern auszugeben.

Am konkreten Beispiel weisen die jeweils baugleichen Feldgeräte 21, 22 und 41, 42 eine entsprechende Statusinformation auf. Der zu dem ersten Feldgerät 21 zugehörigen Signalgeber 210 signalisiert den Status rot 213. Entsprechend signalisiert der Signalgeber 220, zugehörig zu dem zweiten Feldgerät 22 aufgrund der gleichen Bauart der Feldgeräte ebenfalls die rote Statusinformation 223. Ganz entsprechend verhalten sich die Signalgeber 410, 420 des dritten und fünften Feldgeräts 41, 42. Diese signalisieren die Statusinformation grün 411, 421. Der Signalgeber 310, zugehörig zu dem vierten Feldgerät 31, signalisiert die Statusinformation gelb 312.

Weiterhin umfasst das System ein Diagnosegerät 10 mit einer Datenverarbeitungseinrichtung, einer Kommunikationsschnittstelle und einer Mensch-Maschine-Schnittstelle, wobei das Diagnosegerät ausgebildet ist, um mit dem jeweiligen Feldgeräten 21, 22, 41, 31, 42 Informationen auszutauschen und die mit dem Auswahlkriterium korrespondierenden System- und/oder Diagnosewerte und/oder Prozesswerte der jeweiligen Feldgeräte selektiv basierend auf Benutzereingaben an der Mensch-Maschine-Schnittstelle auszuwählen. Hier wurde der Systemwert als korrespondierender Wert zu dem gemeinsamen Auswahlkriterium gewählt.

Ferner umfasst das System einen Diagnoseprogrammcode 11. Der Diagnoseprogrammcode ist ausgebildet, um von der Datenverarbeitungseinrichtung des Diagnosegeräts 10 ausgeführt zu werden.

Der Diagnoseprogrammcode 11 ist dabei ausgebildet, den zumindest einen ausgewählten Systemwerttyp der Feldgeräte 21, 22, 41, 31, 42 abzufragen, zu verarbeiten und/oder zu verändern.

Aus dem zumindest einen ausgewählten System- und/oder Diagnosewert- und/oder Prozesswerttyp der Feldgeräte wird so die Statusinformation 213, 223, 411, 312, 421 für die jeweiligen Feldgeräte 21, 22, 41, 31, 42 ermittelt. Der Diagnoseprogrammcode 11 umfasst Verarbeitungsbefehle, Datenstrukturen und/oder Parameter. Im vorliegenden Fall ist der Diagnoseprogrammcode ein Binärcode, welcher direkt von der Datenverarbeitungseinrichtung des Diagnosegeräts ausgeführt wird.

Das Diagnosegerät 10 ist ausgebildet, den Diagnoseprogrammcode 11 basierend auf den Benutzereingaben in der Mensch-Maschine-Schnittstelle zu erstellen oder aus einer Mehrzahl von anderen Diagnoseprogrammcodes auszuwählen.

Der Diagnoseprogrammcode 11 ist ausgebildet, den zumindest einen ausgewählten System- und/oder Diagnosewert und/oder Prozesswert der jeweiligen Feldgeräte (hier: der Feldgerätetyp) von den jeweiligen Feldgeräten abzurufen und die ermittelte Statusinformation für das jeweilige Feldgerät an das jeweilige Feldgerät zu übertragen.

Das Diagnosegerät 10 ist ausgebildet, den Diagnoseprogrammcode 11 an mehrere der Feldgeräte zu übertragen. Die Feldgeräte 21, 22, 41, 31, 42 sind entsprechend dazu ausgebildet, den Diagnoseprogrammcode 11 in der Datenverarbeitungsvorrichtung auszuführen.

Dabei kann der Diagnoseprogrammcode 11 aus einer Mehrzahl von Diagnoseprogrammcodes ausgewählt werden oder beispielsweise aufgrund eines Templates (Programmcodegrundgerüst) und mittels Parametrisierung erstellt werden. Die Parameter im Diagnoseprogrammcode basieren auf den Benutzereingaben an der Mensch-Maschine-Schnittstelle.

Feldgeräte 21, 22, 41, 31, 42 weisen jeweils einen Diagnosemodus auf. Im Diagnosemodus gibt der jeweils dem Feldgerät zugeordnete Signalgeber 210, 220, 410, 310, 420 die dem jeweiligen Feldgerät zugeordnete Statusinformation 213, 223, 411, 312, 421 aus. Das Diagnosegerät 10 ist dazu ausgebildet, um den Diagnosemodus auf den jeweiligen Feldgeräten 21, 22, 41, 31, 42 zu aktivieren.

Insbesondere ist der Diagnoseprogrammcode 11 ausgebildet, den Diagnosemodus auf den jeweiligen Feldgeräten zu aktivieren.

Gemäß einem Ausführungsbeispiel kann der Diagnosemodus ausgebildet sein, sich nach einer vorbestimmten Zeitspanne selbst zu beenden. Die vorbestimmte Zeitspanne kann dabei entweder vorteilhaft auf den Benutzereingaben an der Mensch-Maschine-Schnittstelle basieren oder sie kann von dem Diagnosegerät ermittelt werden. Gemäß einem Ausführungsbeispiel kann die vorbestimmte Zeitspanne dabei vorteilhaft von System- und/oder Diagnosewerten und/oder Prozesswerten der Feldgeräte und/oder einer Anzahl der Feldgeräte abhängig sein.

Gemäß einem weiteren Ausführungsbeispiel kann der Diagnosemodus der jeweiligen Feldgeräte 21, 22, 41, 31, 42 ausgebildet sein, um von dem Diagnosegerät 10 beendet zu werden. Das Diagnosegerät 10 kann dann entsprechend dazu ausgebildet sein, die Diagnosemodi der Feldgeräte zu beenden.

Die Feldgeräte 21, 22, 41, 31, 42 weisen jeweils eine Bedienvorrichtung (nicht gezeigt) auf. In einem Ausführungsbeispiel kann der Diagnosemodus der Feldgeräte dann vorteilhaft ausgebildet sein, um von einer entsprechenden Benutzereingabe an einer der Bedienvorrichtung beendet zu werden.

Insbesondere kann der Diagnosemodus der jeweiligen Feldgeräte durch eine entsprechende Benutzereingabe an der Bedienvorrichtung des jeweiligen Feldgeräts beendet werden. Zusätzlich oder alternativ können die Feldgeräte derart ausgebildet sein, dass die Diagnosemodi aller Feldgeräte 21, 22, 41, 31, 42 mittels einer entsprechenden Benutzereingabe an der Bedienvorrichtung eines der Feldgeräte beendet werden.

In einer weiteren Ausführungsform kann das Beenden des Diagnosemodus eines ersten Feldgerätes ein Aktivieren des Diagnosemodus eines zweiten Feldgerätes auslösen.

FIG. 3 zeigt eine vereinfachte schematische Darstellung eines Feldbussystems mit Feldgeräten und einem Diagnosegerät.

Der Aufbau der Konfiguration des Systems entspricht in den wesentlichen Merkmalen dem Aufbau und der Konfiguration des Systems aus FIG. 2. Im Folgenden wird deshalb nur auf die Unterschiede gesondert eingegangen.

Die zu den jeweiligen Feldgeräten 21, 31, 22, 41, 51 zugeordneten Signalgeber 210, 310, 220, 410, 510 können mehr als drei unterschiedliche Statusinformationen signalisieren. Konkret handelt es sich um optische Signalgeber, die bspw. entsprechend der NAMUR-Spezifikation NE107 vier bzw. sechs verschiedene Statusinformationen signalisieren können. Diese umfassen blau (Wartung empfohlen), orange (Signal ungültig), gelb (Prozess außerhalb festgelegter Spezifikationen) und rot (andauernde Fehlfunktion des Feldgeräts). Zudem können auch die zwei weiteren Farben (grün und weiß) für die Aktivierung der Diagnosefunktion verwendet werden.

Die Diagnoseprogrammcodes 12, 13, 14 sind ausgebildet, um jeweils von der Datenverarbeitungsvorrichtung eines der Feldgeräte ausgeführt zu werden.

Baugleiche Feldgeräte 21, 22 und Feldgeräte mit der gleichen Steuereinheit 41, 51 weisen jeweils einheitliche Diagnoseprogrammcodes 12 und 14 auf. Der Diagnoseprogrammcode ist dabei ausgebildet, den zumindest einen ausgewählten System- und/oder Diagnosewert und/oder Prozesswert des jeweiligen Feldgeräts des Clusters abzufragen, zu verarbeiten und/oder zu verändern.

Das Diagnosegerät 10 ist ausgebildet, die Diagnoseprogrammcodes 12, 13, 14 basierend auf den Benutzereingaben an der Mensch-Maschine-Schnittstelle zu erstellen oder aus einer Mehrzahl von Diagnoseprogrammcodes auszuwählen.

Das Diagnosegerät 10 ist weiterhin ausgebildet, den jeweiligen Diagnoseprogrammcode 12, 13, 14 an mehrere der Feldgeräte 21, 22 bzw. 41, 51 zu übertragen. Die Feldgeräte sind dazu ausgebildet, den Diagnoseprogrammcode in der Datenverarbeitungsvorrichtung auszuführen.

Die Diagnoseprogrammcodes 12, 13, 14 sind jeweils in einem Speicher der Datenverarbeitungsvorrichtung der jeweiligen Feldgeräte vorgehalten. Eine Parametrisierung wird durch das Diagnosegerät 10 direkt in den Datenverarbeitungsvorrichtungen der jeweiligen Feldgeräte vorgenommen.

Weitere Mischformen der Ausführungsbeispiele sind möglich. Dabei werden nur Teile des Diagnoseprogrammcodes 11 in die jeweiligen Feldgeräte geladen, um die korrespondierenden Werte von dort auf das Diagnoseprogramm zu übertragen, entweder in bearbeiteter oder unbearbeiteter Form, und durch das Diagnosegerät 10 die Signalgeber 210, 310, 220, 410, 510 der entsprechenden Feldgeräte anzusteuern.

Auch ist es möglich, dass keine Diagnoseprogrammcodes vom Diagnosegerät 10 an die Feldgeräte übertragen werden und das Diagnosegerät über das Diagnoseprogramm die jeweiligen Feldgeräte direkt ansteuert. Dabei bedeutet direkt ansteuern, entweder dass der Signalgeber des Feldgerätes unmittelbar vom Diagnosegerät 10 gesetzt wird oder dass das Feldgerät basierend auf einem dort implementierten Code die Anzeige des Signalgebers selbst festlegt.

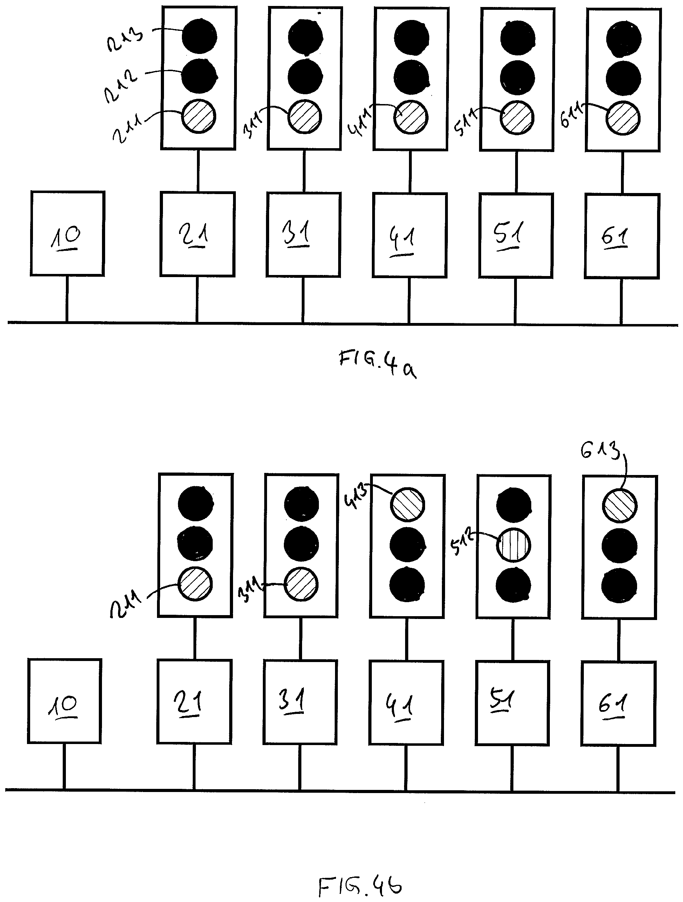

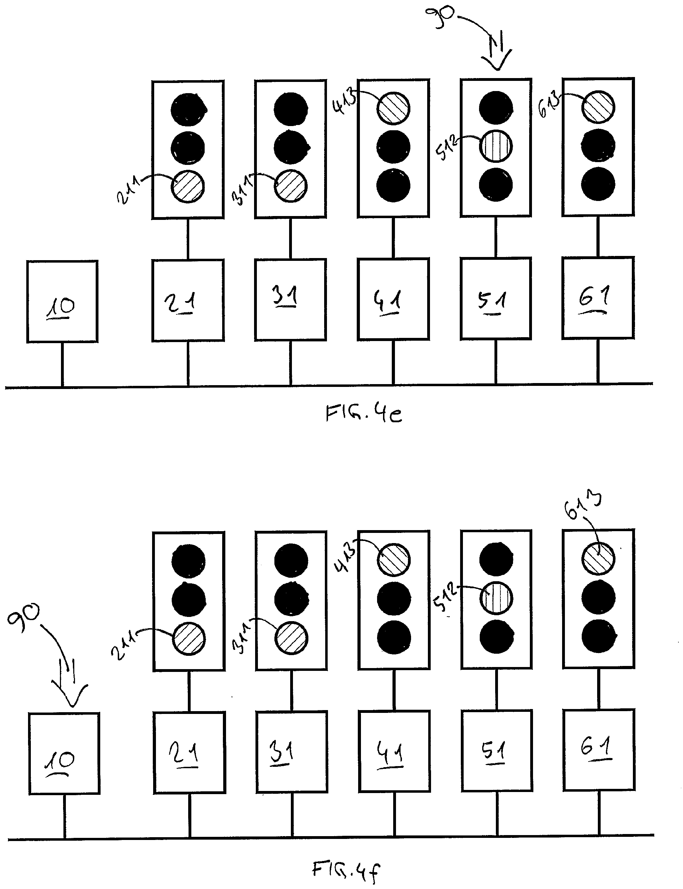

Im Folgenden soll das Verfahren anhand der Sequenzen der FIG. 4a bis FIG. 4f, der FIG. 5a bis FIG. 5d und der FIG. 6a bis FIG. 6f beschrieben werden.

FIG. 4a bis FIG. 4f zeigen eine sequentielle schematische Darstellung eines Feldbussystems mit Feldgeräten und ein Diagnosegerät. Das Feldbussystem mit den Feldgeräten und dem Diagnosegerät entspricht im Wesentlichen denjenigen der FIG. 1 bis 3. In einem normalen Betriebszustand können die Signalgeber jeweils deaktiviert sein (nicht gezeigt) oder beispielsweise den Betriebsmodus anzeigen (FIG. 4a).

Am Diagnosegerät 10 wird zumindest ein korrespondierender System- und/oder Diagnosewert und/oder Prozesswert der jeweiligen Feldgeräte basierend auf einem gemeinsamen Auswahlkriterium ausgewählt. Dies geschieht basierend auf Benutzereingaben an einer Mensch-Maschinen-Schnittstelle des Diagnosegeräts.

Das Verfahren umfasst ferner das Ermitteln einer Statusinformation für das jeweilige Feldgerät des Clusters, basierend auf dem zumindest einen korrespondierenden System- und/oder Diagnosewert und/oder Prozesswert. Beispielsweise kann das gemeinsame Auswahlkriterium die verbleibende Restlebensdauer der Feldgeräte sein. In einem anderen Fall kann das gemeinsame Auswahlkriterium Prozesswerte bspw. bei der Inbetriebnahme des Systems betreffen. So kann es sich je nach Feldgerät bspw. um einen Durchfluss (Durchflussmesser), einen ph-Wert (ph-Wert Sensor) oder eine Ventilstellung (Ventil) handeln. Bei einem weiteren Schritt erfolgt das Ausgeben der jeweiligen Statusinformation 211, 311, 413, 512, 613 durch einen dem jeweiligen Feldgerät zugeordneten Signalgeber.

Das Verfahren umfasst ferner das Erstellen eines Diagnoseprogrammcodes oder Auswählen des Diagnoseprogrammcodes aus einer Mehrzahl von Diagnoseprogrammcodes (nicht gezeigt). Alternativ oder zusätzlich kann es auch das Parametrisieren eines Diagnoseprogrammcodes, basierend auf dem gemeinsamen Auswahlkriterium, umfassen.

Ferner umfasst das Verfahren das Ausführen des Diagnoseprogrammcodes zum Ermitteln der Statusinformation für die jeweiligen Feldgeräte 21, 31, 41, 51 und 61. Der oder die Diagnoseprogrammcodes können dabei insbesondere in der Datenverarbeitungseinrichtung des Diagnosegeräts oder in der Datenverarbeitungsvorrichtung der jeweiligen Feldgeräte ausgeführt werden.

Weiterhin umfasst das Verfahren das Ermitteln der Statusinformation für das jeweilige Feldgerät aus einer Mehrzahl möglicher Statusinformationen. Dabei werden den definierten Werten und/oder Wertebereichen der korrespondierenden System- und/der Diagnosewerte und/oder Prozesswerte in einem Zuordnungsregelwerk jeweils eine Statusinformation der möglichen Statusinformationen zugeordnet. Insbesondere umfasst der Diagnoseprogrammcode das Zuordnungsregelwerk.

Ferner umfasst das Verfahren das Übertragen des Diagnoseprogrammcodes von der Datenverarbeitungseinrichtung des Diagnosegeräts 10 in die Datenverarbeitungsvorrichtung der Feldgeräte 21, 31, 41, 51 und 61.

Alternativ kann das Verfahren auch das Auswählen des Diagnoseprogrammcodes aus einer Mehrzahl von Diagnoseprogrammcodes in den Datenverarbeitungsvorrichtungen der Feldgeräte und/oder das Parametrisierens des Diagnoseprogrammcodes in der jeweiligen Datenverarbeitungsvorrichtung umfassen,

In diesem Fall umfasst das Verfahren das Ausführen des Diagnoseprogrammcodes in den Datenverarbeitungsvorrichtungen der jeweiligen Endgeräte.

FIG. 4b zeigt das Aktivieren des Diagnosemodus in allen Feldgeräten eines Feldgeräte-Clusters. Unter einem Feldgeräte-Cluster wird eine Mehrzahl von Feldgeräten angesehen, wobei diese beispielsweise aufgrund ihrer örtlichen Anordnung gruppiert sein können. Beispielsweise können in einem Feldgeräte-Cluster alle Feldgeräte eines bestimmten Produktionsprozesses oder alle Feldgeräte in einem bestimmten Raum gezählt werden.

Alle in FIG. 4b dargestellten Feldgeräte sind einem gemeinsamen Feldgeräte-Cluster zugeordnet.

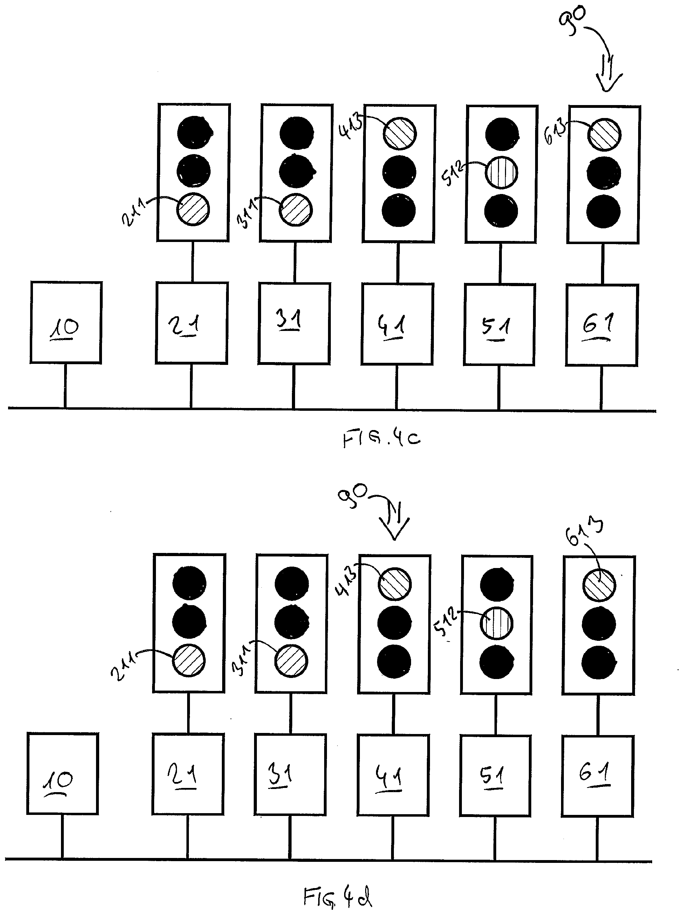

FIG. 4c bis FIG. 4f zeigen in einer zeitlich abfolgenden Sequenz das Vorgehen der Service-Mitarbeiter 90 bei der Wartung. Im Diagnosemodus kann der Service-Mitarbeiter 90 unmittelbar die Statusinformationen der jeweiligen Feldgeräte überblicken.

Er wendet sich deshalb zur räumlich am nächsten liegenden Feldgerät 61 mit hoher Priorität 613 zu (FIG. 4c).

In den folgenden Schritten wartet er die Feldgeräte 41 auch mit Statusinformation drei 413 (FIG. 4d) und Feldgerät 51 mit Statusinformation zwei 512. Die Feldgeräte 21, 31 benötigen keine Wartung und zeigen dies durch die entsprechenden Statusinformationen eins 211 und 311 (FIG. 4e).

Der Service-Mitarbeiter 90 kann somit zum Diagnosegerät zurückkehren und dort die Diagnosemodi aller Feldgeräte 21, 31, 41, 51, 61 durch eine Bedienereingabe beenden.

Alternativ kann das Diagnosegerät auch autark feststellen, ob beispielsweise eine Wartung an allen relevanten Feldgeräten stattgefunden hat, so dass hierdurch der Diagnosemodus jedes Feldgeräts beendet wird.

Zuletzt kann der Diagnosemodus auch durch Ablauf einer vorbestimmten Zeitspanne entweder vom Diagnosegerät oder von den Feldgeräten selbst beendet werden.

Das System kehrt dann in seinen Ursprungszustand (FIG. 4a) zurück.

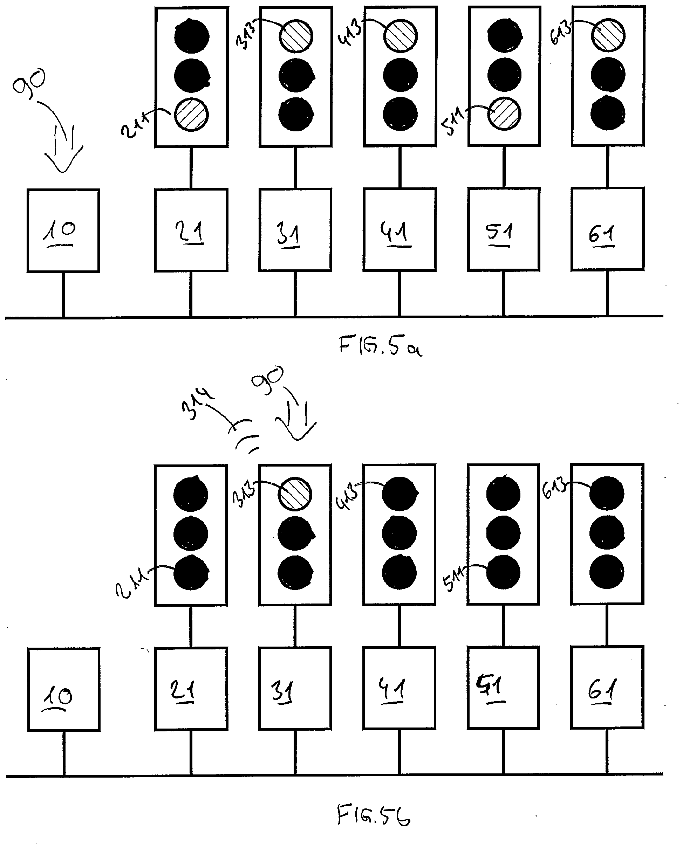

FIG. 5a bis FIG. 5d zeigen ebenfalls das Verfahren in einer zeitlichen Sequenz, wobei hier insbesondere Unterschiede im Aktivieren und Beenden der Diagnosemodi liegen.

Zu erkennen ist, dass auch das gemeinsame Auswahlkriterium ein anderes ist, als in den vorherigen Ausführungsbeispielen. Dies schlägt sich unter anderem in den abweichenden Statusinformationen nieder (FIG. 5a). Das Auswahlkriterium kann dementsprechend vom Bediener bedarfsgerecht aus eine Mehrzahl unterschiedlicher Auswahlkriterien gewählt werden.

Das Diagnosegerät 10 ermittelt die Statusinformationen für die jeweiligen Feldgeräte. Im Anschluss aktiviert es den Diagnosemodus des ersten Feldgeräts 31 mit entsprechender Statusinformation 313. Neben einer visuellen Signalisierung 313 wird auch eine akustische Signalisierung 314 aktiviert (FIG. 5b). Die akustische Signalisierung hilft dem Service-Mitarbeiter 90 dabei, eine Grobortung des Feldgeräts 31 vorzunehmen. Durch die visuelle Signalisierung 313 kann wiederum auch in lauten Umgebungen schnell das richtige Feldgerät gefunden werden.

Nachdem der Service-Mitarbeiter 90 die Wartung von Feldgerät 31 beendet hat, kann er den Diagnosemodus durch das jeweilige Feldgerät 31 insbesondere mittels einer Bedienereingabe deaktivieren.

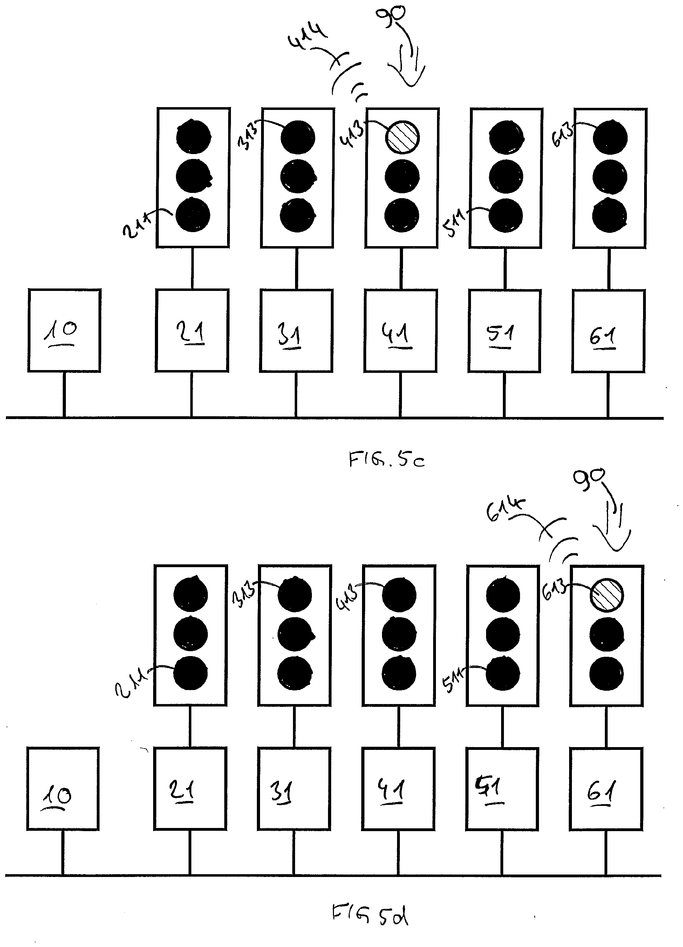

Durch das Beenden des Diagnosemodus von Feldgerät 31 wird automatisch der Diagnosemodus von Feldgerät 41 aktiviert (FIG. 5c).

Nachdem auch hier die Wartung durchgeführt wurde, beendet das jeweilige Feldgerät den Diagnosemodus eigenständig, beispielsweise nach Erfüllung einer Bedingung (hier: den Abschluss der Wartungsarbeiten).

Durch das Beenden des Diagnosemodus für das Feldgerät 41 aktiviert sich der Diagnosemodus für das letzte Feldgerät 61 (FIG. 5d). Das Diagnosegerät 10 kann dem Service-Mitarbeiter 90 nach Beendigung der Wartungsarbeiten das Ende des Verfahrens signalisieren.

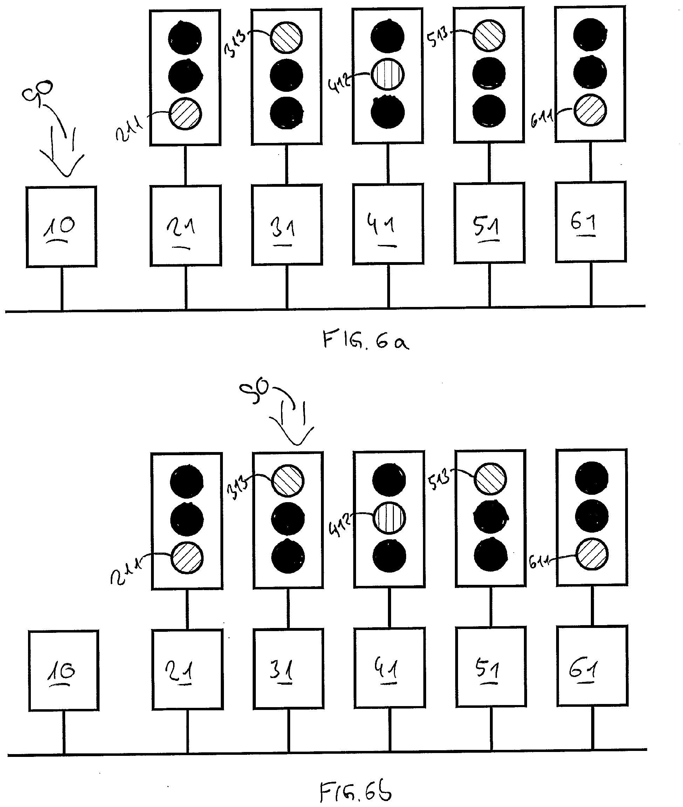

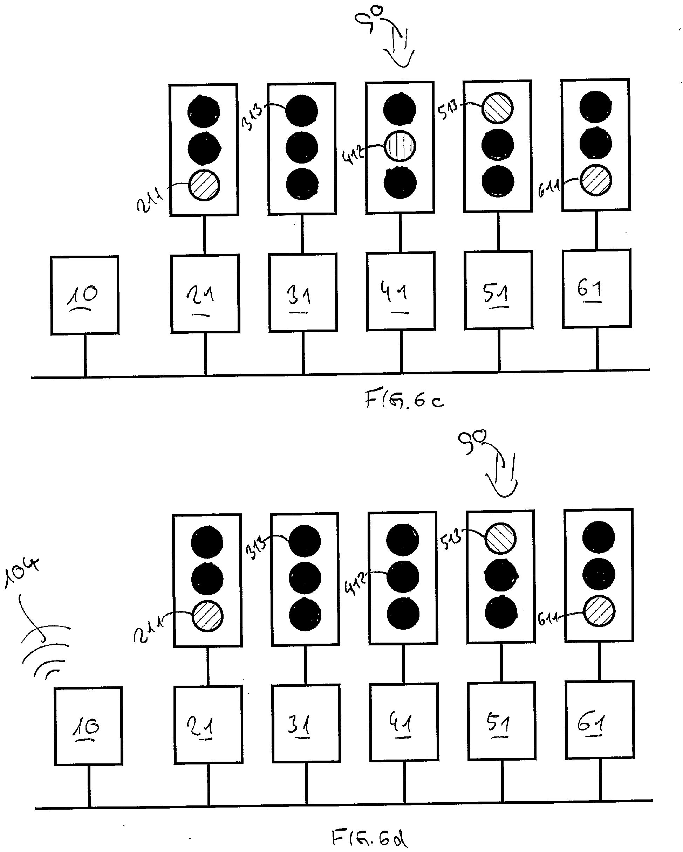

FIG. 6a bis FIG. 6f stellen ein vergleichbares Verfahren dar. Neben einem anderen Auswahlkriterium ist hier in der Sequenz zu erkennen, dass der Service-Mitarbeiter 90 den Diagnosemodus erst an allen Feldgeräten aktiviert (FIG. 6a) und dann nach Ende einer Inspektionstätigkeit am jeweiligen Feldgerät den Diagnosemodus an diesen einzeln deaktiviert (FIG. 6b, FIG. 6c, FIG. 6d).

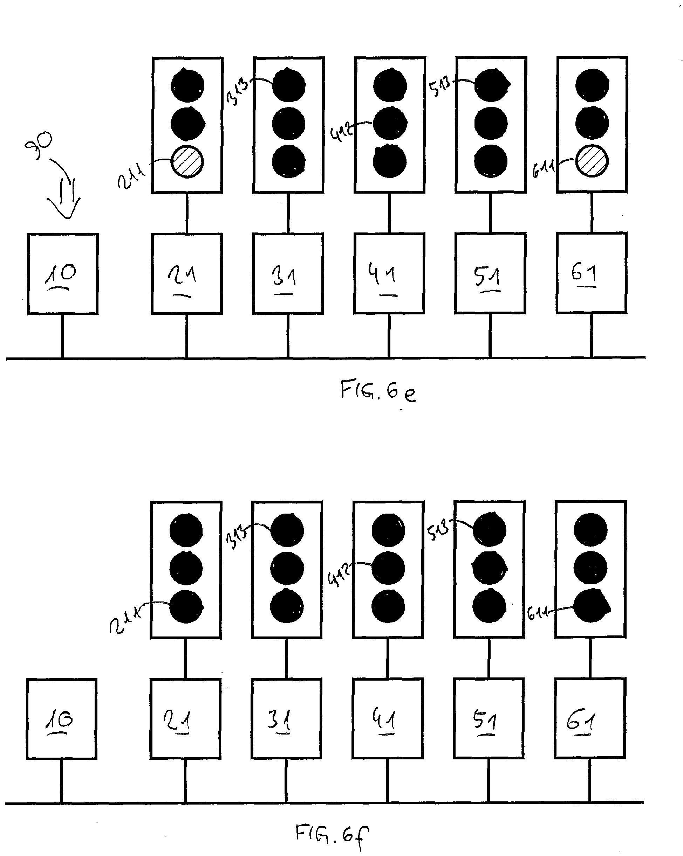

Nachdem die verbleibenden Feldgeräte 21 und 61 nur noch die erste Statusinformation signalisieren 211, 611 beendet der Service-Mitarbeiter den Diagnosemodus aller verbleibender Feldgeräten (FIG. 6e).

Die Feldgeräte kehren in ihren normalen Betriebsmodus zurück; in diesem Fall werden die Signalgeber deaktiviert (FIG. 6f).

## Patentansprüche

1. System umfassend ein Cluster von Feldgeräten (21, 22) mit jeweils einem dem jeweiligen Feldgerät zugeordneten Signalgeber (210, 220), jeweils einer Kommunikationsschnittstelle und jeweils einer Datenverarbeitungsvorrichtung zur Bereitstellung von Systemwerten, Diagnosewerten und/oder Prozesswerten,
wobei das System ausgebildet ist, zumindest einen korrespondierenden System- und/oder Diagnosewert und/oder Prozesswert der jeweiligen Feldgeräte basierend auf einem gemeinsamen Auswahlkriterium selektiv auszuwählen, und
basierend auf dem zumindest einen jeweils ausgewählten System- und/oder Diagnosewert und/oder Prozesswert eine Statusinformation (213, 223) für das jeweilige Feldgerät zu ermitteln und mit dem zugeordneten Signalgeber auszugeben,
wobei das System ferner ein Diagnosegerät (10) mit einer Datenverarbeitungseinrichtung umfasst, einer Kommunikationsschnittstelle und einer Mensch-Maschine-Schnittstelle, wobei das Diagnosegerät ausgebildet ist, um mit den jeweiligen Feldgeräten Informationen auszutauschen, und entsprechend dem gemeinsamen Auswahlkriterium die korrespondierenden System- und/oder Diagnosewerte und/oder Prozesswerte der jeweiligen Feldgeräte selektiv basierend auf Benutzereingaben an der Mensch-Maschine-Schnittstelle auszuwählen,
wobei das System ferner einen Diagnoseprogrammcode (11) umfasst, wobei der Diagnoseprogrammcode ausgebildet ist, um von der Datenverarbeitungseinrichtung des Diagnosegerätes und/oder von der Datenverarbeitungsvorrichtung eines der Feldgeräte ausgeführt zu werden,
wobei der Diagnoseprogrammcode ferner ausgebildet ist, den zumindest einen ausgewählten System- und/oder Diagnosewert und/oder Prozesswert des einen Feldgerätes abzufragen, zu verarbeiten und/oder zu verändern, und aus dem zumindest einen ausgewählten System- und/oder Diagnosewert und/oder Prozesswert des einen Feldgerätes die Statusinformation für das eine Feldgerät zu ermitteln,
insbesondere wobei der Diagnoseprogrammcode Verarbeitungsbefehle, Datenstrukturen und/oder Parameter umfasst, wobei das Diagnosegerät ausgebildet ist, den Diagnoseprogrammcode basierend auf den Benutzereingaben an der Mensch-Maschine-Schnittstelle zu erstellen oder aus einer Mehrzahl von Diagnoseprogrammcodes auszuwählen,
wobei das Diagnosegerät ausgebildet ist, den Diagnoseprogrammcode an mehrere der Feldgeräte zu übertragen, und wobei die Feldgeräte ausgebildet sind, den Diagnoseprogrammcode in der Datenverarbeitungsvorrichtung auszuführen.

2. System gemäß Anspruch 1, wobei das Diagnosegerät (10) ausgebildet ist, den Diagnoseprogrammcode (11) in der Datenverarbeitungseinrichtung auszuführen, und wobei der Diagnoseprogrammcode ausgebildet ist, den zumindest einen ausgewählten System- und/oder Diagnosewert und/oder Prozesswert der jeweiligen Feldgeräte (21, 22) von den jeweiligen Feldgeräten abzurufen und die ermittelte Statusinformation (213, 223) für das jeweilige Feldgerät an das jeweilige Feldgerät zu übertragen.

3. System gemäß einem der Ansprüche 1 bis 2, wobei der Diagnoseprogrammcode (11) aus der Mehrzahl von Diagnoseprogrammcodes (12, 14) ausgewählt wird, und wobei die Mehrzahl von Diagnoseprogrammcodes in einem Speicher der Datenverarbeitungseinrichtung des Diagnosegeräts (10) und/oder in einem Speicher der Datenverarbeitungsvorrichtung der jeweiligen Feldgeräte (21, 22) vorgehalten wird.

4. System gemäß einem der Ansprüche 1 bis 3, wobei das Diagnosegerät (10) ausgebildet ist, Parameter im Diagnoseprogrammcode (11) basierend auf den Benutzereingaben an der Mensch-Maschine-Schnittstelle einzustellen.

5. System gemäß einem der Ansprüche 1 bis 4, wobei die Feldgeräte (21, 22) jeweils einen Diagnosemodus aufweisen, wobei im Diagnosemodus der dem jeweiligen Feldgerät zugeordnete Signalgeber (210, 220) die Statusinformation (213, 223) ausgibt,
insbesondere wobei die Datenverarbeitungsvorrichtung des jeweiligen Feldgerätes ausgebildet ist, um den zugehörigen Signalgeber derart anzusteuern, dass der Signalgeber im Diagnosemodus die Statusinformation ausgibt, und
insbesondere wobei der Signalgeber nach Beendigung des Diagnosemodus ein zuletzt vor Beginn des Diagnosemodus ausgegebenes Signal ausgibt.

6. System gemäß Anspruch 5, wobei das Diagnosegerät (10) ausgebildet ist, um den Diagnosemodus auf den jeweiligen Feldgeräten (21, 22) zu aktivieren, und/oder wobei der Diagnoseprogrammcode (11) ausgebildet ist, um den Diagnosemodus auf den jeweiligen Feldgeräten zu aktivieren.

7. System gemäß einem der Ansprüche 5 oder 6, wobei sich der Diagnosemodus nach einer vorbestimmten Zeitspanne selbst beendet, insbesondere wobei die vorbestimmte Zeitspanne auf den Benutzereingaben an der Mensch-Maschine-Schnittstelle basiert oder von dem Diagnosegerät (10) ermittelt wird und dabei insbesondere von System- und/oder Diagnosewerten und/oder Prozesswerten der Feldgeräte (21, 22) und/oder einer Anzahl der Feldgeräte abhängig ist, und/oder wobei der Diagnosemodus der jeweiligen Feldgeräte ausgebildet ist, um von dem Diagnosegerät beendet zu werden, und wobei das Diagnosegerät ausgebildet ist, die Diagnosemodi der Feldgeräte zu beenden und/oder die Feldgeräte jeweils eine Bedienvorrichtung aufweisen, und wobei der Diagnosemodus der Feldgeräte ausgebildet ist, um von einer entsprechenden Benutzereingabe an einer der Bedienvorrichtungen beendet zu werden, insbesondere wobei der Diagnosemodus der jeweiligen Feldgeräte durch eine entsprechende Benutzereingabe an der Bedienvorrichtung des jeweiligen Feldgeräts beendet wird, und/oder wobei die Feldgeräte ausgebildet sind, sodass die Diagnosemodi aller Feldgeräte mittels einer entsprechenden Benutzereingabe an der Bedienvorrichtung eines der Feldgeräte beendet werden.

8. System gemäß einem der Ansprüche 5 bis 7, derart ausgebildet, dass ein Beenden des Diagnosemodus eines ersten Feldgerätes (21) ein Aktivieren des Diagnosemodus eines zweiten Feldgerätes (22) auslöst.

9. Verfahren zur Selektion und Identifikation von Feldgeräten aus einem Cluster von Feldgeräten (21, 22), das Verfahren umfassend die Schritte:
a) Auswählen zumindest eines korrespondierenden System- und/oder Diagnosewertes und/oder Prozesswertes der jeweiligen Feldgeräte (21, 22) basierend auf einem gemeinsamen Auswahlkriterium basierend auf Benutzereingaben an einer Mensch-Maschine-Schnittstelle eines Diagnosegerätes (10),
e) Ermitteln einer Statusinformation (213, 223) für das jeweilige Feldgerät, basierend auf dem zumindest einen korrespondierenden System- und/oder Diagnosewert und/oder Prozesswert,
g) Ausgeben der jeweiligen Statusinformation von allen Feldgeräten des Clusters durch einen dem jeweiligen Feldgerät zugeordneten Signalgeber (210, 220), insbesondere in einem Diagnosemodus der Feldgeräte,
b) Erstellen eines Diagnoseprogrammcodes (11) oder Auswählen des Diagnoseprogrammcodes aus einer Mehrzahl von Diagnoseprogrammcodes (12, 14) durch eine Datenverarbeitungseinrichtung des Diagnosegerätes (10),
e1) Ausführen des Diagnoseprogrammcodes zum Ermitteln der Statusinformationen (213, 223) für die jeweiligen Feldgeräte (21, 22) in Schritt e) in der Datenverarbeitungseinrichtung des Diagnosegerätes oder in Datenverarbeitungsvorrichtungen der jeweiligen Feldgeräte,
e2) Ermitteln der Statusinformation für das jeweilige Feldgerät aus einer Mehrzahl möglicher Statusinformationen, wobei definierten Werten und/oder Wertebereichen der mit dem Auswahlkriterium korrespondierenden System- und/oder Diagnosewerte und/oder Prozesswerte in einem Zuordnungsregelwerk jeweils eine Statusinformation der möglichen Statusinformationen zugeordnet sind in Schritt e), insbesondere wobei der Diagnoseprogrammcode das Zuordnungsregelwerk umfasst,
b2) Auswählen des Diagnoseprogrammcodes aus einer Mehrzahl von Diagnoseprogrammcodes in den Datenverarbeitungsvorrichtungen der Feldgeräte in Schritt b),
wobei das Verfahren ferner die Schritte umfasst:
c) Übertragen des Diagnoseprogrammcodes von der Datenverarbeitungseinrichtung des Diagnosegerätes in die Datenverarbeitungsvorrichtung der Feldgeräte nach Schritt b) und vor Schritt e),
e3) Ausführen des Diagnoseprogrammcodes in den Datenverarbeitungsvorrichtungen der jeweiligen Feldgeräte in Schritt e).

10. Verfahren gemäß Anspruch 9, umfassend die Schritte:
f1) Aktivieren des Diagnosemodus zumindest eines der Feldgeräte (21), insbesondere vor Schritt g), insbesondere der Diagnosemodi aller Feldgeräte (21, 22) eines Feldgeräteclusters, insbesondere durch das Diagnosegerät (10), oder
f2) Aktivieren des Diagnosemodus eines der Feldgeräte, insbesondere vor Schritt g), insbesondere durch das Diagnosegerät, und/oder insbesondere durch das Feldgerät, und/oder insbesondere durch eine Bedienereingabe an dem Feldgerät, und/oder insbesondere durch ein weiteres Feldgerät, und/oder insbesondere durch eine Bedienereingabe an dem weiteren Feldgerät,
und/oder
h1) automatisches Beenden des Diagnosemodus nach einer vorbestimmten Zeitspanne, insbesondere nach Schritt g), und/oder
h2) Beenden des Diagnosemodus durch das Diagnosegerät, insbesondere nach einer Bedienereingabe und/oder nach Erfüllung einer Bedingung, insbesondere nach Schritt g), und/oder
h3) Beenden des Diagnosemodus durch das jeweilige Feldgerät, insbesondere nach einer Bedienereingabe und/oder nach Erfüllung einer Bedingung, insbesondere nach Schritt g).

## Claims

1. A system comprising a cluster of field devices (21, 22) each having a signal generator (210, 220) assigned to the respective field device, a communication interface and a data processing device for the provision of system values, diagnostic values and/or process values,
wherein the system is configured to selectively choose at least one corresponding system value and/or diagnostic value and/or process value of the respective field devices on the basis of a common selection criterion, and
to determine status information (213, 223) for the respective field device on the basis of the at least one respectively selected system value and/or diagnostic value and/or process value and to output it using the assigned signal generator,
wherein the system further comprises a diagnostic apparatus (10) having a data processing means, a communication interface and a human-machine interface, wherein the diagnostic apparatus is configured to exchange information with the respective field devices, and to selectively choose the corresponding system values and/or diagnostic values and/or process values of the respective field devices on the basis of user inputs at the human-machine interface and in accordance with the common selection criterion,
wherein the system further comprises a diagnostic program code (11), wherein the diagnostic program code is configured to be executed by the data processing means of the diagnostic apparatus and/or by the data processing device of one of the field devices,
wherein the diagnostic program code is further configured to retrieve, to process and/or to change the at least one selected system value and/or diagnostic value and/or process value of said field device, and to determine the status information for said field device from the at least one selected system value and/or diagnostic value and/or process value of said field device,
in particular wherein the diagnostic program code comprises processing instructions, data structures and/or parameters, wherein the diagnostic apparatus is configured to create the diagnostic program code on the basis of the user inputs at the human-machine interface or to select it from a plurality of diagnostic program codes,
wherein the diagnostic apparatus is configured to transmit the diagnostic program code to several of the field devices, and wherein the field devices are configured to execute the diagnostic program code in the data processing device.

2. The system according to claim 1, wherein the diagnostic apparatus (10) is configured to execute the diagnostic program code (11) in the data processing means, and wherein the diagnostic program code is configured to retrieve the at least one selected system value and/or diagnostic value and/or process value of the respective field devices (21, 22) from the respective field devices and to transmit the determined status information (213, 223) for the respective field device to the respective field device.

3. The system according to any of claims 1 to 2, wherein the diagnostic program code (11) is selected from the plurality of diagnostic program codes (12, 14), and wherein the plurality of diagnostic program codes is stored in a memory of the data processing means of the diagnostic apparatus (10) and/or in a memory of the data processing device of the respective field devices (21, 22).

4. The system according to any of claims 1 to 3, wherein the diagnostic apparatus (10) is configured to set parameters in the diagnostic program code (11) on the basis of the user inputs at the human-machine interface.

5. The system according to any of claims 1 to 4, wherein the field devices (21, 22) each have a diagnostic mode, wherein in the diagnostic mode, the signal generator (210, 220) assigned to the respective field device outputs the status information (213, 223),
in particular wherein the data processing device of the respective field device is configured to pilot the associated signal generator such that the signal generator outputs the status information in the diagnostic mode, and
in particular wherein after termination of the diagnostic mode, the signal generator outputs a signal last output before the beginning of the diagnostic mode.

6. The system according to claim 5, wherein the diagnostic apparatus (10) is configured to activate the diagnostic mode on the respective field devices (21, 22) and/or wherein the diagnostic program code (11) is configured to activate the diagnostic mode on the respective field devices.

7. The system according to any of claims 5 or 6, wherein the diagnostic mode is self-ending after a predetermined period of time,
in particular wherein the predetermined period of time is based on the user inputs at the human-machine interface or is determined by the diagnostic apparatus (10) and in particular depends on system values and/or diagnostic values and/or process values of the field devices (21, 22) and/or on a number of the field devices, and/or wherein the diagnostic mode of the respective field devices is configured to be terminated by the diagnostic apparatus, and wherein the diagnostic apparatus is configured to terminate the diagnostic modes of the field devices and/or the field devices each have an operating device, and wherein the diagnostic mode of the field devices is configured to be terminated by an appropriate user input at one of the operating devices, in particular wherein the diagnostic mode of the respective field devices is terminated by an appropriate user input at the operating device of the respective field device, and/or wherein the field devices are configured such that the diagnostic modes of all field devices are terminated by means of an appropriate user input at the operating device of one of the field devices.

8. The system according to any of claims 5 to 7, which is configured such that a termination of the diagnostic mode of a first field device (21) initiates an activation of the diagnostic mode of a second field device (22).

9. A method of selecting and identifying field devices from a cluster of field devices (21, 22), the method comprising the steps of:
a) selecting at least one corresponding system value and/or diagnostic value and/or process value of the respective field devices (21, 22) on the basis of a common selection criterion on the basis of user inputs at a human-machine interface of a diagnostic apparatus (10),
e) determining status information (213, 223) for the respective field device on the basis of the at least one corresponding system value and/or diagnostic value and/or process value,
g) outputting the respective status information of all field devices of the cluster by a signal generator (210, 220) assigned to the respective field device, in particular in a diagnostic mode of the field devices,
b) creating a diagnostic program code (11) or selecting the diagnostic program code from a plurality of diagnostic program codes (12, 14) by a data processing means of the diagnostic apparatus (10),
e1) executing the diagnostic program code for determining the status information (213, 223) for the respective field devices (21, 22) in step e) in the data processing means of the diagnostic apparatus or in data processing devices of the respective field devices,
e2) determining the status information for the respective field device from a plurality of possible items of status information, wherein status information of the possible items of status information is respectively assigned to defined values and/or ranges of values of the system values and/or diagnostic values and/or process values corresponding to the selection criterion in a set of assignment regulations in step e), in particular wherein the diagnostic program code includes the set of assignment regulations,
b2) selecting the diagnostic program code from a plurality of diagnostic program codes in the data processing devices of the field devices in step b),
wherein the method further comprises the steps of:
c) transmitting the diagnostic program code from the data processing means of the diagnostic apparatus into the data processing device of the field devices after step b) and before step e),
e3) executing the diagnostic program code in the data processing devices of the respective field devices in step e).

10. The method according to claim 9, comprising the steps of:
f1) activating the diagnostic mode of at least one of the field devices (21), in particular before step g), in particular the diagnostic modes of all field devices (21, 22) of a field device cluster, in particular by the diagnostic apparatus (10), or
f2) activating the diagnostic mode of one of the field devices, in particular before step g), in particular by the diagnostic apparatus, and/or in particular by the field device, and/or in particular by a user input at the field device, and/or in particular by a further field device, and/or in particular by a user input at the further field device,
and/or
h1) automatically terminating the diagnostic mode after a predetermined period of time, in particular after step g), and/or
h2) terminating the diagnostic mode by the diagnostic apparatus, in particular after a user input and/or after the fulfilment of a condition, in particular after step g), and/or
h3) terminating the diagnostic mode by the respective field device, in particular after a user input and/or after the fulfilment of a condition, in particular after step g).

## Revendications

1. Système, comprenant un cluster d'appareils de champ (21, 22) présentant chacun un générateur de signaux (210, 220) attribué à l'appareil de champ respectif, une interface de communication et un dispositif de traitement de données pour le fournissement de valeurs de système, de valeurs de diagnostic et/ou de valeurs de processus,
le système étant réalisé de manière à sélectionner de manière sélective au moins une valeur de système et/ou une valeur de diagnostic et/ou une valeur de processus correspondante des appareils de champ respectifs sur la base d'un critère de sélection commun, et
à déterminer une information d'état (213, 223) pour l'appareil de champ respectif sur la base de ladite au moins une valeur de système et/ou valeur de diagnostic et/ou valeur de processus respectivement sélectionnée et à la sortir au moyen du générateur de signaux attribué,
le système comprenant en outre un appareil de diagnostic (10) présentant un moyen de traitement de données, une interface de communication et une interface homme-machine, l'appareil de diagnostic étant réalisé de manière à échanger des informations avec les appareils de champ respectifs et à sélectionner de manière sélective, conformément au critère de sélection commun, les valeurs de système et/ou les valeurs de diagnostic et/ou les valeurs de processus correspondantes des appareils de champ respectifs sur la base d'entrées utilisateur au niveau de l'interface homme-machine et,
le système comprenant en outre un code de programme de diagnostic (11), le code de programme de diagnostic étant réalisé de manière à être exécuté par le moyen de traitement de données de l'appareil de diagnostic et/ou par le dispositif de traitement de données d'un des appareils de champ,
le code de programme de diagnostic étant en outre réalisé de manière à extraire, traiter et/ou modifier ladite au moins une valeur de système et/ou valeur de diagnostic et/ou valeur de processus sélectionnée dudit appareil de champ, et à déterminer l'informations d'état pour ledit un appareil de champ à partir de ladite au moins une valeur de système et/ou valeur de diagnostic et/ou valeur de processus sélectionnée dudit appareil de champ,
le code de programme de diagnostic comprenant en particulier des instructions de traitement, des structures de données et/ou des paramètres, l'appareil de diagnostic étant réalisé de manière à créer le code de programme de diagnostic sur la base des entrées utilisateur au niveau de l'interface homme-machine ou à le sélectionner parmi une pluralité de codes de programme de diagnostic,
l'appareil de diagnostic étant réalisé de manière à transmettre le code de programme de diagnostic à plusieurs des appareils de champ, et les appareils de champ étant réalisés de manière à exécuter le code de programme de diagnostic au sein du dispositif de traitement de données.

2. Système selon la revendication 1, l'appareil de diagnostic (10) étant réalisé de manière à exécuter le code de programme de diagnostic (11) au sein du moyen de traitement de données, et le code de programme de diagnostic étant réalisé de manière à extraire ladite au moins une valeur de système et/ou valeur de diagnostic et/ou valeur de traitement sélectionnée des appareils de champ respectifs (21, 22) parmi les appareils de champ respectifs, et à transmettre l'information d'état déterminée (213, 223) pour l'appareil de champ respectif à l'appareil de champ respectif.

3. Système selon l'une des revendications 1 à 2, le code de programme de diagnostic (11) étant sélectionné parmi la pluralité de codes de programme de diagnostic (12, 14), et la pluralité de codes de programme de diagnostic étant stockée dans une mémoire du moyen de traitement de données de l'appareil de diagnostic (10) et/ou dans une mémoire du dispositif de traitement de données des appareils de champ respectifs (21, 22).

4. Système selon l'une des revendications 1 à 3, l'appareil de diagnostic (10) étant réalisé de manière à régler des paramètres dans le code de programme de diagnostic (11) sur la base des entrées utilisateur au niveau de l'interface homme-machine.

5. Système selon l'une des revendications 1 à 4, les appareils de champ (21, 22) présentant chacun un mode de diagnostic, le générateur de signaux (210, 220) attribué à l'appareil de champ respectif sortant l'information d'état (213, 223) dans le mode de diagnostic,
le dispositif de traitement de données de l'appareil de champ respectif étant en particulier réalisé de manière à piloter le générateur de signaux associé de telle sorte que le générateur de signaux sort l'information d'état dans le mode de diagnostic, et
le générateur de signaux, après la fin du mode de diagnostic, sortant en particulier un signal sorti en dernier avant le début du mode de diagnostic.

6. Système selon la revendication 5, l'appareil de diagnostic (10) étant réalisé de manière à activer le mode de diagnostic sur les appareils de champ respectifs (21, 22), et/ou le code de programme de diagnostic (11) étant réalisé de manière à activer le mode de diagnostic sur les appareils de champ respectifs.

7. Système selon l'une des revendications 5 ou 6, le mode de diagnostic se terminant automatiquement après une période de temps prédéterminée,
la période de temps prédéterminée étant en particulier basée sur les entrées utilisateur au niveau de l'interface homme-machine ou étant déterminée par l'appareil de diagnostic (10) et dépendant en particulier de valeurs de système et/ou de valeurs de diagnostic et/ou de valeurs de processus des appareils de champ (21, 22) et/ou d'un nombre des appareils de champ, et/ou le mode de diagnostic des appareils de champ respectifs étant réalisé de manière à être terminé par l'appareil de diagnostic, et l'appareil de diagnostic étant réalisé de manière à terminer les modes de diagnostic des appareils de champ, et/ou les appareils de champ présentant chacun un dispositif de commande, et le mode de diagnostic des appareils de champ étant réalisé de manière à être terminé par une entrée utilisateur appropriée sur l'un des dispositifs de commande, le mode de diagnostic des appareils de champ respectifs étant en particulier terminé par une entrée utilisateur appropriée sur le dispositif de commande de l'appareil de champ respectif, et/ou les appareils de champ étant réalisés de telle sorte que les modes de diagnostic de tous les appareils de champ sont terminés par une entrée utilisateur appropriée sur le dispositif de commande de l'un des appareils de champ.

8. Système selon l'une des revendications 5 à 7, lequel est réalisé de telle sorte que la fin du mode de diagnostic d'un premier appareil de champ (21) déclenche l'activation du mode de diagnostic d'un deuxième appareil de champ (22).

9. Procédé de sélection et d'identification d'appareils de champ parmi un cluster d'appareils de champ (21, 22), le procédé comprenant les étapes suivantes :
a) sélectionner au moins une valeur de système et/ou une valeur de diagnostic et/ou une valeur de processus correspondante des appareils de champ respectifs (21, 22) sur la base d'un critère de sélection commun sur la base d'entrées utilisateur au niveau d'une interface homme-machine d'un appareil de diagnostic (10),
e) déterminer l'informations d'état (213, 223) pour l'appareil de champ respectif sur la base de ladite au moins une valeur de système et/ou valeur de diagnostic et/ou valeur de processus correspondante,
g) sortir l'information d'état respective de tous les appareils de champ du cluster par un générateur de signaux (210, 220) attribué à l'appareil de champ respectif, en particulier dans un mode de diagnostic des appareils de champ,
b) créer un code de programme de diagnostic (11) ou sélectionner le code de programme de diagnostic parmi une pluralité de codes de programme de diagnostic (12, 14) par un moyen de traitement de données de l'appareil de diagnostic (10),
e1) exécuter le code de programme de diagnostic pour déterminer l'information d'état (213, 223) pour les appareils de champ respectifs (21, 22) à l'étape e) au sein du moyen de traitement de données de l'appareil de diagnostic ou au sein de dispositifs de traitement de données des appareils de champ respectifs,
e2) déterminer l'information d'état pour l'appareil de champ respectif à partir d'une pluralité d'informations d'état possibles, une information d'état des informations d'état possibles étant respectivement attribuée à des valeurs et/ou des plages de valeurs définies des valeurs de système et/ou des valeurs de diagnostic et/ou des valeurs de processus correspondant au critère de sélection dans un ensemble de règles d'attribution à l'étape e), le code de programme de diagnostic comprenant en particulier l'ensemble de règles d'attribution,
b2) sélectionner le code de programme de diagnostic parmi une pluralité de codes de programme de diagnostic dans les dispositifs de traitement de données des appareils de champ à l'étape b),
le procédé comprenant en outre les étapes suivantes :
c) transmettre le code de programme de diagnostic du moyen de traitement de données de l'appareil de diagnostic dans le dispositif de traitement de données des appareils de champ après l'étape b) et avant l'étape e),
e3) exécuter le code de programme de diagnostic dans les dispositifs de traitement de données des appareils de champ respectifs à l'étape e).

10. Procédé selon la revendication 9, comprenant les étapes suivantes :
f1) activer le mode de diagnostic d'au moins l'un des appareils de champ (21), en particulier avant l'étape g), en particulier les modes de diagnostic de tous les appareils de champ (21, 22) d'un groupe d'appareils de champ, en particulier par l'appareil de diagnostic (10), ou
f2) activer le mode de diagnostic de l'un des appareils de champ, en particulier avant l'étape g), en particulier par l'appareil de diagnostic, et/ou en particulier par l'appareil de champ, et/ou en particulier par une entrée utilisateur au niveau de l'appareil de champ, et/ou en particulier par un autre appareil de champ, et/ou en particulier par une entrée utilisateur au niveau de l'autre appareil de champ,
et/ou
h1) terminer automatiquement le mode de diagnostic après une période de temps prédéterminée, en particulier après l'étape g), et/ou
h2) terminer le mode de diagnostic par l'appareil de diagnostic, en particulier après une entrée utilisateur et/ou après la satisfaction d'une condition, en particulier après l'étape g), et/ou
h3) terminer le mode de diagnostic par l'appareil de champ respectif, en particulier après une entrée utilisateur et/ou après la satisfaction d'une condition, en particulier après l'étape g).
